# EUROPEAN PATENT SPECIFICATION

(11) **EP 2 386 387 B1**
(45) Date of publication and mention of the grant of the patent: **27.03.2013**
(21) Application number: 10796701.0
(22) Date of filing: 22.06.2010
(51) Int. Cl.: B25J 9/02, G05B 19/19, G06F 3/00

(54) **ENGINEERING VEHICLE ARM SUPPORT CONTROLLER CONTROL SYSTEM ENGINEERING VEHICLE AND CONTROL METHOD**
STEUERUNG FÜR DEN TRAGARM EINES INDUSTRIEFAHRZEUGS, INDUSTRIEFAHRZEUG UND STEUERVERFAHREN DAFÜR
DISPOSITIF DE COMMANDE DE SUPPORT DE BRAS POUR ENGIN DE TRAVAUX PUBLICS, SYSTÈME DE COMMANDE, ENGIN DE TRAVAUX PUBLICS ET PROCÉDÉ DE COMMANDE

(30) Priority: 06.07.2009 CN 200910158819
(43) Date of publication of application: 16.11.2011
(73) Proprietor: Hunan Sany Intelligent Control Equipment Co., Ltd, Hunan 410100 (CN); Sany Heavy Industry Co., Ltd., Changsha Hunan 410100 (CN)
(72) Inventor: WU, Zhiyong, Hunan 410100 (CN); ZHOU, Jihui, Hunan 410100 (CN); WU, Hanqi, Hunan 410100 (CN)
(74) Representative: Schmitz, Alexander
(86) International application number: PCT/CN2010/074237
(87) International publication number: WO 2011/003324

(56) References cited:
- WO-A1-2008/129818
- CN-A- 1 745 987
- CN-A- 1 843 710
- CN-A- 1 853 876
- CN-A- 101 604 153
- JP-A- 2009 006 410
- US-A- 5 937 143
- US-A- 6 167 328
- US-A1- 2003 208 301

## Description

The present application claims the priority to Chinese Patent Application No. 200910158819.X, titled "ENGINEERING VEHICLE ARM SUPPORT CONTROLLER, CONTROL SYSTEM, ENGINEERING VEHICLE AND CONTROL METHOD", filed with the Chinese State Intellectual Property Office on July 6, 2009, which is incorporated herein by reference in its entirety.

### FIELD OF THE INVENTION

The present invention relates to a technique for controlling engineering vehicle booms, especially to an engineering vehicle boom controller. The present invention also provides an engineering vehicle boom control system which employs the engineering vehicle boom controller and an engineering vehicle which employs the engineering vehicle boom controller. The present invention further provides an engineering vehicle boom control method.

### BACKGROUND OF THE INVENTION

Various engineering vehicles have booms. The boom is an operating mechanism constituted by at least two segments articulated in sequence through horizontal articulated axles, and each of the segments is able to rotate by an appropriate angle around the articulated axle. The boom as a whole is fixed on a frame via a swivel table, and the boom driven by the swivel table can rotate by 360 degrees around a vertical axis perpendicular to the horizontal plane. Generally, the boom is used as actuators in construction projects. For instance, a boom of a concrete pump truck is utilized to support, transportation pipelines and control the motion track of a hose at the end of the transportation pipelines via the movement of the boom, so that concrete can be pumped to desired positions. Accordingly, the control of movement of the boom of the concrete pump truck, which mainly is the control of the motion track of the end of the boom, is very important for implementing construction requirements.

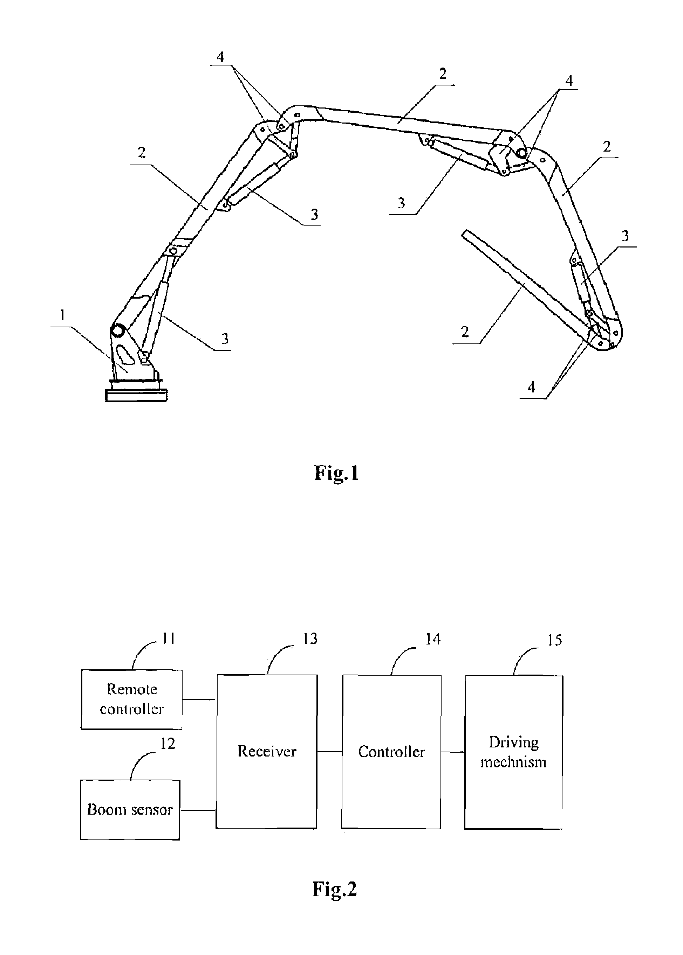

Fig. 1 shows a structural view of a typical concrete pump truck with a four-segment boom. The pump truck includes a swivel table 1, segments 2, hydraulic cylinders 3 for controlling the segments 2 to rotate relative to other segments, connecting rods 4 for connecting adjacent segments, and fittings. The pump truck shown in Fig.1 includes four segments 2, and correspondingly includes four hydraulic cylinders 3 and three connecting rods 4.

The swivel table 1 connects the boom 2 and a pump truck chassis. The swivel table 1 is controlled to rotate clockwise or anticlockwise so as to rotate the whole boom. The unfolding and folding of each segment 2 is carried out by the corresponding hydraulic cylinder 3. By controlling the rate of flow of the hydraulic oil in each hydraulic cylinder 3, the movement velocity of the corresponding segment 2 can be controlled, and thereby the motion track of the end of the boom can be controlled.

Fig.2 is a structural diagram of a control system for a boom of a concrete pump truck in the prior art.

The control system includes a remote controller 11, a boom sensor 12, a receiver 13, a controller 14 and a driving mechanism 15.

The remote controller 11 receives a control quantity provided by an operator, and sends the received control quantity to the receiver 13 in a wireless or wired way. In the prior art, the remote controller 11 employs a spherical control handle to perform the control process.

The boom sensors 12 includes various sensors which reflect the actual state of the boom and obtain real-time state parameters of the boom by detection, in which a main real-time state parameter is the spatial position of each segment of the boom. Typically, the spatial position of each segment is sensed by angle sensors mounted at the head of each segment 2 and mounted between the boom and the swivel table.

The receiver 13 collects the control quantity from the remote controller 11 and the real-time state parameters from the boom sensors 12 and sends them to the controller 14.

Based on a control command and the real-time state parameters from the receiver 13, the controller 14 calculates a control command value corresponding to each hydraulic cylinder 3 via a predetermined control algorithm, and sends them to the driving mechanism 15.

The driving mechanism 15, according to the received control command value, supplies each hydraulic cylinder 3 with a drive current or a drive voltage corresponding to the control command.

During the control process of the boom of the pump truck employing the above-mentioned control device, the operator operates the spherical control handle of the remote controller 11 to control the movement of the end of the boom. Commonly, the inclination direction of the control handle represents the desired movement direction of the end of the boom, and the magnitude of the inclination angle represents the desired movement speed of the end of the boom. The operator determines the desired position of the end of the boom visually with personal experience, and controls the boom to move to the desired position by operating the handle of the remote controller 11.

During the remote operation employing the above-mentioned remote controller 11 with a control handle, the spherical control handle is difficult to control and the adjustable range of its inclination angle is limited, and the variation range of the movement speed of the end of the boom is wider, that is, the limited variation of the inclination angle of the control handle needs to correspond to the wide variation range of the movement speed of the end of the boom, which results in the sensitivity of the control handle being too high to adjust the movement speed of the end of the boom accurately. Besides, it is also difficult to control the inclination direction of the spherical handle precisely, which also makes it difficult to control the movement direction of the end of the boom accurately.

### SUMMARY OF THE INVENTION

In view of the disadvantages described above, the present invention provides an engineering vehicle boom controller which provides more suitable operation devices which can reflect the operation intention of an operator more accurately, so as to achieve the accurate control of the movement angle and the movement speed of the end of a boom. The present invention further provides an engineering vehicle boom control system comprising the engineering vehicle boom controller, an engineering vehicle comprising the engineering vehicle boom control system, and an engineering vehicle boom control method.

The present invention provides an engineering vehicle boom controller, including: a touch screen comprising a display and a touch sensor, a display drive unit, a display control unit, and a control command generating unit; where
the touch screen displays an operation sensing sign, senses an exterior touch, and generates a touch sensing signal reflecting a position of a touch point on the touch screen;
the display drive unit, in response to a display control command from the display control unit, provides a display drive to the touch screen to control a display content of the touch screen, the display content including a shape of the operation sensing sign and a position of the operation sensing sign on the touch screen;
the display control unit receives the touch sensing signal from the touch screen, obtains the position of the touch point on the touch screen, determines whether there is an overlap between the position of the touch point and a current position of the operation sensing sign, and sets the operation sensing sign as in an activated state if there is an overlap between the position of the touch point and the current position of the operation sensing sign; when the operation sensing sign is in an activated state, resets the operation sensing sign as in a sleeping state if the touch sensing signal disappears; when the operation sensing sign is in an activated state, provides the display control command to the display drive unit, the display control command instructing the operation sensing sign to display at the position of the touch point indicated by the touch sensing signal; and
the control command generating unit receives the touch sensing signal from the touch screen and an operation sensing sign state signal from the display drive unit, generates a control command reflecting a desired speed and direction of movement of the end of the boom based on the position of the touch point on the touch screen represented by the touch sensing signal and a predetermined corresponding relationship if the operation sensing sign is in an activated state, and sends out the control command in a wired or wireless way.

Preferably, the operation sensing sign in a sleeping state is displayed in a geometric centre of the touch screen.

Preferably, the operation sensing sign is a dot with a certain area.

Preferably, the corresponding relationship between the position of the touch point on the touch screen and the movement direction of the end of the boom is established in the following way: establishing a rectangular coordinate system of the touch screen on a touch plane of the touch screen, in which a display position of the operation sensing sign in a sleeping state is set as an origin and predetermined directions perpendicular to each other are set as an X axis and a Y axis; establishing a rectangular coordinate system of actual movement on a movement plane of the end of the boom, in which an initial position of movement of the end of the boom is set as an origin and two directions on the movement plane perpendicular to each other are set as an X axis and a Y axis; the desired movement direction of the end of the boom is determined by corresponding the direction of the line, connecting the origin of the rectangular coordinate system of the touch screen to the position of the touch point on the touch screen, to a direction forming the same angle with the X axis and the Y axis in the rectangular coordinate system of actual movement.

Preferably, the touch screen is square or rectangular; in the rectangular coordinate system of the touch screen, the X axis is parallel to upper and lower borders of the touch screen and has a positive direction pointing to the right of the touch screen, the Y axis is parallel to right and left borders of the touch screen and has a positive direction pointing to the upside of the touch screen.

Preferably, the desired movement speed of the end of the boom is determined by a distance between the position of the touch point on the touch screen and the origin of the rectangular coordinate system of the touch screen, and the greater the distance is, the higher the speed is.

Preferably, the corresponding relationship between the position of the touch point on the touch screen and the movement direction of the end of the boom is established in the following way: establishing a polar coordinate system of the touch screen, in which the display position of the operation sensing sign in a sleeping state is set as a pole and a predetermined direction is set as a polar axis; establishing a polar coordinate system of actual movement on the movement plane of the end of the boom, in which the initial position of movement of the end of the boom is set as an origin and a predetermined movement direction on the movement plane is set as a polar axis; the desired movement direction of the end of the boom is obtained in the following way: obtaining a polar angle value of the touch point in the polar coordinate system of the touch screen, and obtaining the same polar angle value in the polar coordinate system of actual movement as that in the polar coordinate system of the touch screen, in which the movement direction represented by the polar angle value is the desired direction of movement of the end of the boom.

Preferably, the touch screen is square or rectangle; in the rectangular coordinate system of the touch screen, the polar axis is parallel to upper and lower borders of the touch screen and has a positive direction pointing to the right of the touch screen.

Preferably, the desired movement speed of the end of the boom is determined by a polar radius value of the touch point in the polar coordinate system of the touch screen, and the greater the polar radius value is, the higher the speed is.

The present invention further provides an engineering vehicle boom control system including the engineering vehicle boom controller according to the present invention.

The present invention further provides an engineering vehicle including the engineering vehicle boom control system according to the present invention.

Preferably, the engineering vehicle is a concrete pump truck or a crane.

The present invention further provides an engineering vehicle boom control method, including:
displaying an operation sensing sign on a touch screen, sensing an exterior touch, and generating a touch sensing signal which indicates a position of a touch point on the touch screen;
receiving the touch sensing signal from the touch screen, obtaining the position of the touch point on the touch screen, determining whether there is an overlap between the position of the touch point and a current position of the operation sensing sign, setting the operation sensing sign as in an activated state if there is an overlap between the position of the touch point and the current position of the operation sensing sign, and sending a corresponding display control command which instructs the operation sensing sign to display at the position of the touch point indicated by the touch sensing signal;
in response to the display control command, providing a display drive to the touch screen to control a display content of the touch screen, the display content comprising a shape of the operation sensing sign and the position of the operation sensing sign on the touch screen; and
when receiving the touch sensing signal from the touch screen and an operation sensing sign state signal, generating a control command reflecting a desired speed and direction of movement of the end of the boom based on the position of the touch point on the touch screen represented by the touch sensing signal and a predetermined corresponding relationship if the operation sensing sign is in an activated state, and sending the control command in a wired or wireless way.

Preferably, when the operation sensing sign is in activated state, the operation sensing sign is reset as in a sleeping state if the touch sensing signal disappears.

Preferably, the operation sensing sign in a sleeping state is displayed in a geometric centre of the touch screen.

Preferably, the corresponding relationship between the position of the touch point on the touch screen and the movement direction of the end of the boom is established in the following way: establishing a rectangular coordinate system of the touch screen on a touch plane of the touch screen, in which a display position of the operation sensing sign in a sleeping state is set as an origin and predetermined directions are set as an X axis and a Y axis perpendicular to each other; establishing a rectangular coordinate system of actual movement on a movement plane of the end of the boom, in which an initial position of movement of the end of the boom is set as an origin and two directions perpendicular to each other on the movement plane are set as an X axis and a Y axis; the desired movement direction of the end of the boom is determined by corresponding the direction of the line, connecting the origin of the rectangular coordinate system of the touch screen to the position of the touch point on the touch screen, to a direction forming the same angle with the X axis and the Y axis in rectangular coordinate system of actual movement.

Preferably, the corresponding relationship between the position of the touch point on the touch screen and the movement direction of the end of the boom is established in the following way:
establishing a polar coordinate system of the touch screen, in which a display position of the operation sensing sign in a sleeping state is set as a pole and a predetermined direction is set as a polar axis; establishing a polar coordinate system of actual movement on a movement plane of the end of the boom, in which an initial position of movement of the end of the boom is set as an origin and a predetermined movement direction on the movement plane is set as a polar axis; the desired movement direction of the end of the boom is obtained in the following way: obtaining a polar angle value of the touch point in the polar coordinate system of the touch screen, and obtaining the same polar angle value in the polar coordinate system of actual movement as that in the polar coordinate system of the touch screen, in which the movement direction represented by the polar angle value is the desired direction of movement of the end of the boom.

The engineering vehicle boom controller according to the present invention employs a touch screen as the operation input device, and an operator can control the movement direction and speed of the end of the boom by controlling the operation sensing sign on the touch screen, thereby achieving simulation of the operating way with an operating handle in the prior art. Since it is more simple and convenient to operate on the touch screen than to use an operating handle, and the movement direction and speed can be controlled more precisely, and therefore, it is possible for this type of controller to control the movement speed and direction of the end of the boom more accurately. Besides, the control signals generated by the operating handle in the prior art are analog signals which need to be processed by analog-digital conversion, while the control signals generated by the touch screen are digital signals, and therefore, the internal structure of this type of controller is more simple. Additionally, compared with the control handle, the touch screen has a smaller size and a lighter weight and is easy to be integrated with other parts, which enable the controller to be made in portable forms.

In preferred embodiments of the present invention, the rectangular coordinate system or the polar coordinate system is used to correspond the touch surface of the touch screen with the actual movement plane of the end of the boom. Therefore, the desired movement speed and direction of the operator can be delivered accurately through controlling the touch position on the coordinate systems, which makes it possible to control the movement speed and direction of the end of the boom accurately.

### BRIEF DESCRIPTION OF THE DRAWINGS

Fig.1 is a structural view of a typical concrete pump truck with a four-segment boom;

Fig.2 is a structural diagram of a system for controlling a concrete pump truck boom in the prior art;

Fig.3 is a structural diagram of an engineering vehicle boom controller according to an embodiment of the present invention;

Fig.4 is a flowchart showing the way of establishing a rectangular coordinate system for a touch screen and achieving the predetermined corresponding relationship via the rectangular coordinate system;

Fig. 5 is a flowchart showing the way of establishing a polar coordinate system for the touch screen and achieving the predetermined corresponding relationship via the polar coordinate system; and

Fig.6 is a flowchart, of a method for an engineering vehicle boom according to an embodiment of the present invention.

### DETAILED DESCRIPTION OF THE INVENTION

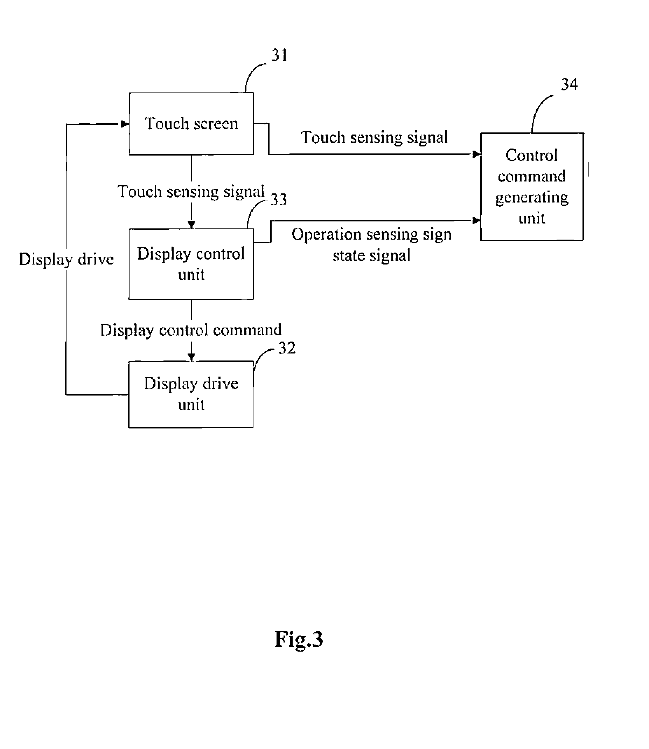

Fig.3 shows an engineering vehicle boom controller according to an embodiment of the present invention. The controller mainly includes a touch screen, related control units and various operation buttons. Because the present invention only relates to the improvement of replacing a control handle with the touch screen, the following description only relates to a function unit in which the controller controls the movement of the end of the boom via the touch screen.

As described in Fig.3, the engineering vehicle boom controller according to the embodiment includes a touch screen 31 constituted by a display and a touch sensor, a display drive unit 32, a display control unit 33, and a control command generating unit 34.

The touch screen 31 displays an operation sensing sign, senses an exterior touch, and generates a touch sensing signal which can reflect the position of a touch point on the touch screen. The touch screen 31 is a common electric device familiar to those skilled in the art, and it is not described herein in detail.

The display drive unit 32, in response to a display control command from the display control unit 33, provides a display drive to the touch screen 31 to control the display content on the touch screen 31. The display content includes the shape of the operation sensing sign and the position thereof on the touch screen, In this embodiment, the shape of the operation sensing sign is a dot with a certain area which is easy to touch and operate by linger. Actually, the operation sensing sign can also use other shapes, such as crisscross. The position of the operation sensing sign on the touch screen is determined by the position information contained in the display control command output in real-time from the display control unit 33.

The display control unit 33 receives the touch sensing signal from the touch screen 31, and obtains the position of the touch point on the screen, determines whether there is an overlap between the position of the touch point and the current position of the operation sensing sign, and if there is such an overlap, sets the operation sensing sign as an activated state. When the operation sensing sign is in an activated state, if the touch sensing signal disappears, the display control unit 33 resets the operation sensing sign as a sleeping state. When the operation sensing sign is in an activated state, the display control unit 33 provides a corresponding display control command, which instructs the operation sensing sign to display at the position of the touch point reflected by the touch sensing signal, to the display drive unit. When the operation sensing sign is in a sleeping state, the display control unit 33 outputs a corresponding display control command, which instructs the operation sensing sign to display at a predetermined position on the touch screen. Indeed, the operation sensing sign may also stay at the position where it was before being set as a sleeping state, and the position of the operation sensing sign when being activated next time can act as the origin of a coordinate system of the touch screen. Apparently, the former solution is more reasonable. This embodiment adopts the former solution, in which the geometric center of the touch screen is selected as the display position.

The touch screen 31 has a touch signal sensing sensor which can generates the touch sensing signal when the touch screen is touched. The touch sensing signal includes position information of the touch point on the touch screen. Furthermore, the position of the operation sensing sign is determined by the display control command sent by the display control unit 33, and therefore, the display control unit 33 is able to acquire the specific position of the operation sensing sign from the display control command sent by itself. After acquiring the above-mentioned information, the display control unit 33 may determine whether there is an overlap between the touch point and the operation sensing sign. To achieve the same operating effect as using control handles, the controller can be operated only when an operator touches the operation sensing sign directly. Therefore, it is necessary to determine whether there is an overlap between the current touch point and the operation sensing sign, and if there is such an overlap, the display control unit 33 sets the operation sensing sign as an activated state and controls the operation sensing sign to move as the touch point moves, i.e., the operation sensing sign is displayed at the position of the touch point indicated by the touch sensing signal. In this way, the operator can get good and timely feedback of the operation signal. Once the touch sensing signal disappears, which means that the operator is not touching the surface of the touch screen, the operation sensing sign is instantly reset as a sleeping state for avoiding any mistake in operating. In this way, when the operator touches the touch screen on a point far away from the operation sensing sign, the operation sensing sign will not move. The control process provided by the display control unit 33 achieves the simulation of the control handle, avoiding sudden changes in the movement speed and direction in the subsequent control process.

The control command generating unit 34 receives the touch sensing signal from the touch screen 31 and an operation sensing sign state signal contained in the display drive signal provided by the display control unit 33. When the operation sensing sign is in an activated state, the control command generating unit 34 generates a control command reflecting a desired speed and direction of movement of the end of the boom based on the coordinate position of the touch point on the touch screen that is represented by the touch sensing signal and a predetermined corresponding relationship, and sends out the control command.

The control command generating unit 34 needs to generate the control command reflecting the desired speed and direction of movement of the end of the boom of the operator, however, the desired speed and direction of movement of the end of the boom of the operator corresponds to a touch operation on the operation sensing sign by the operator of the controller. The reason being referred to as the operation on the operation sensing sign is that in fact the operator operates in the following way: firstly, the operator touches the operation sensing sign to set it in an activated state; then, the operator keeps the touch of the touch screen and moves thereon at a certain angle and direction, with the operation sensing sign following. Thus, the operator's operating intention of the end of the boom can be delivered by controlling the position of the operation sensing sign on the touch screen or by controlling the position of the operation sensing sign relative to the initial display position in a sleeping state. If the operator moves away from the touch screen during the operation, the operation sensing sign will be reset as a sleeping state and returns to the initial display position, so as to ensure the continuity of the operation of the operator and avoid any possible misoperation. It should be noted that when the operation sensing sign is in an activated state, the display control unit 33 controls the operation sensing sign to move along with the touch point, and at this time, the position of the touch point is in conformity with the position of the operation sensing sign. It is intuitive to the operator that the operator controls the operation sensing sign by means of touch.

A key issue is how to convert the position of the touch point (or the position of the operation sensing sign) on the touch screen or the position of the operation sensing sign relative to the initial display position in a sleeping state into the control command as intended which reflects the desired speed and direction of movement of the end of the boom of the operator. Undoubtedly, there are various conversion methods, however, to the operator this conversion process should be intuitive for establishing an intuitive corresponding relationship between the control of the operation sensing sign and the actual movement state of the end of the boom conveniently. Hereinafter, two conversion methods are provided for generating a control command reflecting the desired speed and direction of movement of the end of the boom according to a predetermined corresponding relationship. Both ways are to establish a coordinate system of the touch screen on the touch screen, to correspond the movement direction of the touch point in the coordinate system of the touch screen to a coordinate system pre-established on the movement plane of the end of the boom, so as to establish a corresponding relationship between the movement direction of the touch point in the coordinate system of the touch screen and the actual movement direction of the end of the boom. Furthermore, based on the distance between the end point of the motion track of the touch point and the initial position of the operation sensing sign, a desired movement speed of the end of the boom can be obtained, and eventually a corresponding control command is generated. One of these two ways is to establish a rectangular coordinate system of the touch screen on the touch screen, and the other is to establish a polar coordinate system of the touch screen on the touch screen, which will be described below in detail respectively.

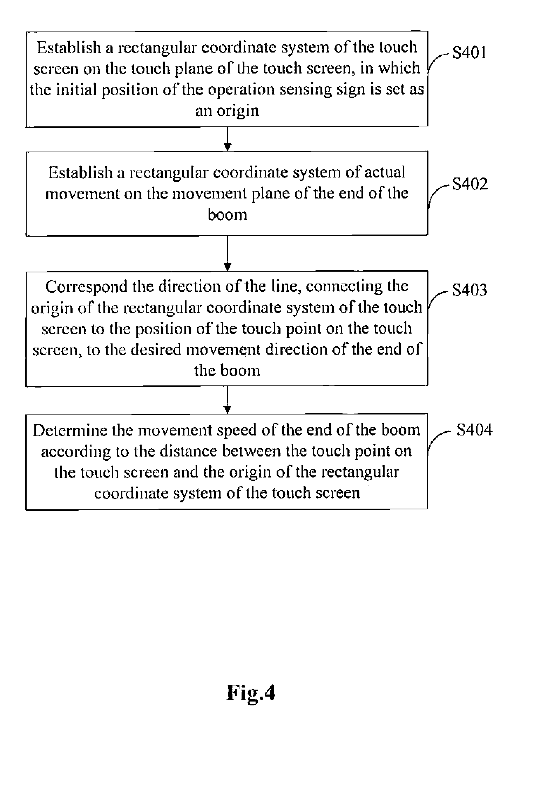

Referring to Fig.4, the way of establishing a rectangular coordinate system of the touch screen and establishing a predetermined corresponding relationship according to the rectangular coordinate system is described hereinafter.

In step S401, the rectangular coordinate system of the touch screen is established on the touch plane of the touch screen, by taking the initial position of the operation sensing sign as an origin and setting predetermined directions as an X axis and a Y axis which are perpendicular to each other.

In this embodiment, the initial position of the operation sensing sign is the initial position of the operation sensing sign in a sleeping state. As mentioned above, the display control unit 33 controls the operation sensing sign in a sleeping state to be displayed at a predetermined position, and specifically is displayed in a geometric centre of the touch screen. Therefore, setting the predetermined directions as the X axis and the Y axis which are perpendicular to each other include determining a positive direction of the X axis and a positive direction of the Y axis. Common touch screens are square or rectangular, and a recommended method for establishing the rectangular coordinate system of the touch screen is that the X axis is set to be parallel to upper and lower borders of the touch screen with the positive direction pointing to the right of the touch screen and the Y axis is set to be parallel to right and left borders with the positive direction pointing to the upside of the touch screen.

In step 402, a rectangular coordinate system of actual movement is established on the movement plane of the end of the boom, in which the initial position of movement of the end of the boom is set as an origin of the rectangular coordinate system of actual movement and two movement directions perpendicular to each other on the movement plane are set as an X axis and a Y axis of the rectangular coordinate system of actual movement.

Since in actual control operation, the initial position of movement of the end of the boom is always considered as a starting point of a next action, the staring point is taken as the origin of the rectangular coordinate system of actual movement for facilitating the conversion. The directions of the X axis and the Y axis may be set according to a reference direction of the engineering vehicle. A preferred embodiment is to establish a rectangular coordinate system of actual movement which is easy to correspond to the rectangular coordinate system of the touch screen from an overlooking viewpoint.

In step S403, the direction of the line connecting the origin of the rectangular coordinate system of the touch screen to the position of the touch point on the touch screen is corresponded to a direction forming the same angle with the X axis and the Y axis in the rectangular coordinate system of actual movement, in which the direction is the desired movement direction of the end of the boom.

In step 404, the movement speed of the end of the boom is determined by the distance between the touch point on the touch screen and the origin of the rectangular coordinate system of the touch screen. In a preferred embodiment, the greater the distance is, the higher the desired movement speed is, and the distance is proportional to the desired movement speed.

Through the establishment of the above-mentioned corresponding relationship, the position of the touch point in the rectangular coordinate system of the touch screen reflects the speed and direction of movement of the end of the boom desired by the operator.

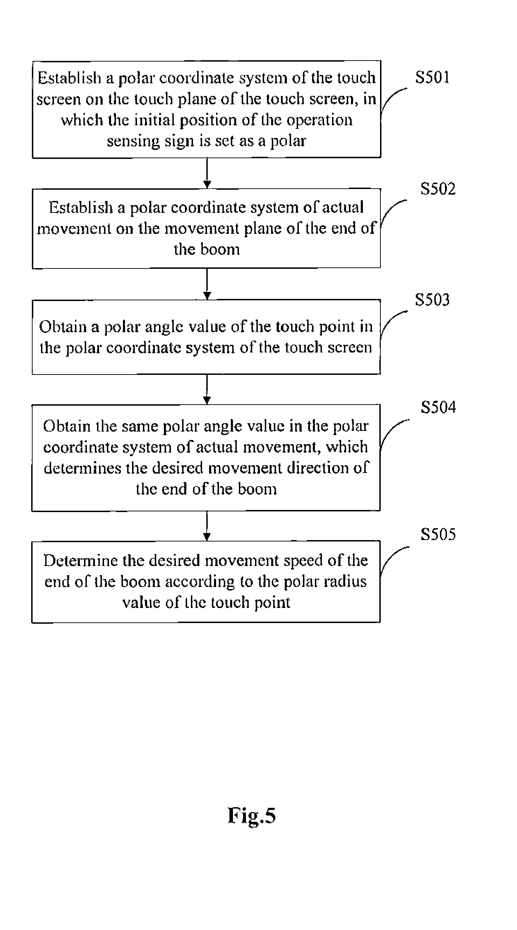

Referring to Fig.5, the way of establishing the polar coordinate system of the touch screen and establishing a predetermined corresponding relationship according to the polar coordinate system is described hereinafter.

In step S501, a polar coordinate system of the touch screen on the touch plane of the touch screen is established, by taking the initial position of the operation sensing sign as a pole and setting a predetermined direction as a polar axis.

For most of rectangular or square touch screens, the pole is set in the geometric center of the rectangle or square, and the polar axis is set to be parallel to the upper and lower borders of the touch screen, with its positive direction pointing to the right of the touch screen.

In step S502, a polar coordinate system of actual movement is established on the movement plane of the end of the boom, in which the initial position of movement of the end of the boom is set as the origin and a predetermined movement direction on the movement plane is set as the polar axis.

In step S503, a polar angle value of the touch point in the polar coordinate system of the touch screen is obtained.

In step S504, a polar angle value in the polar coordinate system of actual movement as the same as that in the polar coordinate system of the touch screen is obtained, which determines the desired movement direction of the end of the boom.

In step S505, the desired movement speed of the end of the boom is determined by a polar radius value of the touch point. The greater the polar radius value is, the higher the movement speed of the end of the boom is. In a preferred embodiment, the polar radius value of the touch point is proportional to the movement speed of the end of the boom.

The controller according to embodiments of the present invention may be arranged on a far-end of a boom of an engineering vehicle, to control the boom in a remote control manner, for example, by means of handheld remote controller, distant operation platform and the like. In this case, it is only needed to arrange the display on the corresponding remote controller, and the control command generating unit generates a remote control command and sends out the remote control command in a wired or wireless way.

Alternatively, the controller may be arranged on a near end of the boom of the engineering vehicle, for example, in the operation room of the engineering vehicle and the like. In this case, it is only needed to arrange the display on the operation platform in the operation room of the engineering vehicle.

If the controllers according to the above embodiments are applied to an engineering vehicle boom control system, a corresponding engineering vehicle boom control system can be obtained. As to the protection scope of the present invention, the boom control system may be various control systems in the prior art, and any engineering vehicle boom control system which includes the controller with a touch screen according to the present invention will fall into the scope of present invention.

If the above engineering vehicle boom control system is applied to an engineering vehicle, the engineering vehicle including the boom control system with a controller having a touch screen is obtained. Particularly, the engineering vehicle is a concrete pump truck or a crane.

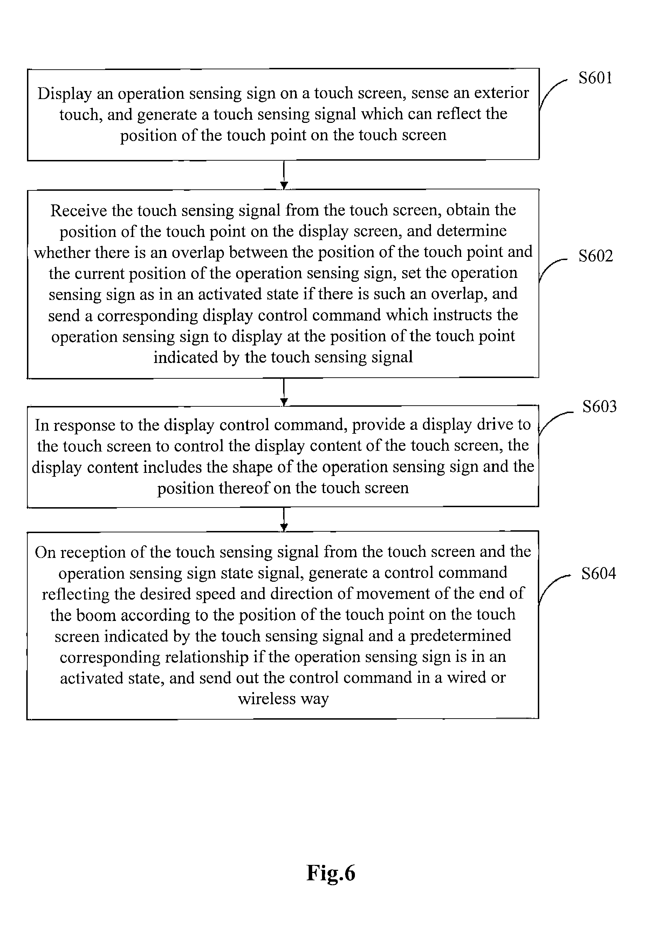

The present invention further provides an engineering vehicle boom control method corresponding to the engineering vehicle boom controller of the present invention. Fig. 6 shows a flowchart of an engineering vehicle boom control method according to an embodiment of the present invention. The control method includes the following steps:

Step S601: Displaying an operation sensing sign on a touch screen, sensing an exterior touch, and generating a touch sensing signal which can reflect the position of a touch point on the touch screen;

Herein, the operation sensing sign is a dot with a certain area;

Step S602: Receiving the touch sensing signal from the touch screen, obtaining the position of the touch point on the display screen, determining whether there is an overlap between the position of the touch point and a current position of the operation sensing sign, setting the operation sensing sign as in an activated state if there is such an overlap, and sending out a corresponding display control command which instructs the operation sensing sign to display at the position of the touch point indicated by the touch sensing signal;

Herein, when the operation sensing sign is in an activated state, the operation sensing sign is reset as a sleeping state if the touch sensing signal disappears; and the operation sensing sign in a sleeping state is displayed in the geometric center of the touch screen;

Step S603: According to the display control command, providing a display drive to the touch screen to control a display content of the touch screen, the display content including a shape of the operation sensing sign and the position of the operation sensing sign on the touch screen; and

Step S604: On reception of the touch sensing signal from the touch screen and an operation sensing sign state signal, generating a control command reflecting a desired speed and direction of movement of the end of the boom according to the position of the touch point on the touch screen indicated by the touch sensing signal and a predetermined corresponding relationship if the operation sensing sign is in an activated state, and sending out the control command in a wired or wireless way.

Preferably, in step S604, the corresponding relationship between the position of the touch point on the touch screen and the movement direction of the end of the boom may be established by the following way: establishing a rectangular coordinate system of the touch screen on the touch plane of the touch screen, in which a display position of the operation sensing sign in a sleeping state is set as an origin and predetermined directions are set as an X axis and a Y axis perpendicular to each other; establishing a rectangular coordinate system of actual movement on the corresponding movement plane of the end of the boom, in which an initial position of movement of the end of the boom is set as an origin and two movement directions perpendicular to each other on the movement plane are set as an X axis and a Y axis respectively; the desired movement direction of the end of the boom is determined by corresponding the direction of the line, connecting the origin of the rectangular coordinate system of the touch screen to the position of the touch point on the touch screen, to a direction forming the same angle with the X axis and the Y axis in the rectangular coordinate system of actual movement.

Herein, the desired movement speed of the end of the boom is determined by the distance between the position of the touch point on the touch screen and the origin of the rectangular coordinate system of the touch screen. The greater the distance is, the higher the speed is.

Preferably, in step S604, the corresponding relationship between the coordinate position of the touch point on the touch screen and the movement direction of the end of the boom may be alternatively established in the following way: establishing a polar coordinate system of the touch screen, in which a display position of the operation sensing sign in a sleeping state is set as a pole and a predetermined direction is set as a polar axis; establishing a polar coordinate system of actual movement on a corresponding movement plane of the end of the boom, in which the initial position of movement of the end of the boom is set as an origin and a predetermined movement direction on the movement plane is set as a polar axis; the desired movement direction of the end of the boom may be obtained in the following way: obtaining a polar angle value of the touch point in the polar coordinate system of the touch screen, and obtaining the same polar angle value in the polar coordinate system of actual movement as that in the polar coordinate system of the touch screen, in which the movement direction represented by the polar angle value is the desired direction of the end of the boom.

The above description is only preferred embodiments of the present invention. It should be noted that for those skilled in the art, any improvements and modifications without departing from the principle of the present invention shall fall into the protection scope of the

## Claims

1. An engineering vehicle boom controller, comprising: a touch screen comprising a display and a touch sensor, a display drive unit, a display control unit, and a control command generating unit; wherein
the touch screen displays an operation sensing sign, senses an exterior touch, and generates a touch sensing signal reflecting a position of a touch point on the touch screen;
the display drive unit, in response to a display control command from the display control unit, provides a display drive to the touch screen to control a display content of the touch screen, the display content including a shape of the operation sensing sign and a position of the operation sensing sign on the touch screen;
the display control unit receives the touch sensing signal from the touch screen, obtains the position of the touch point on the touch screen, determines whether there is an overlap between the position of the touch point and a current position of the operation sensing sign, and sets the operation sensing sign as in an activated state if there is an overlap between the position of the touch point and the current position of the operation sensing sign; when the operation sensing sign is in an activated state, resets the operation sensing sign as in a sleeping state if the touch sensing signal disappears; when the operation sensing sign is in an activated state, provides the display control command to the display drive unit, the display control command instructing the operation sensing sign to display at the position of the touch point indicated by the touch sensing signal; and
the control command generating unit receives the touch sensing signal from the touch screen and an operation sensing sign state signal from the display control unit, generates a control command reflecting a desired speed and direction of movement of the end of the boom based on the position of the touch point on the touch screen represented by the touch sensing signal and a predetermined corresponding relationship if the operation sensing sign is in an activated state, and sends out the control command in a wired or wireless way.

2. The engineering vehicle boom controller according to claim 1, wherein the operation sensing sign in a sleeping state is displayed in a geometric centre of the touch screen.

3. The engineering vehicle boom controller according to claim 1, wherein the operation sensing sign is a dot with a certain area.

4. The engineering vehicle boom controller according to any of claims 1 to 3, wherein the corresponding relationship between the position of the touch point on the touch screen and the movement direction of the end of the boom is established in the following way: establishing a rectangular coordinate system of the touch screen on a touch plane of the touch screen, in which a display position of the operation sensing sign in a sleeping state is set as an origin and predetermined directions perpendicular to each other are set as an X axis and a Y axis; establishing a rectangular coordinate system of actual movement on a movement plane of the end of the boom, in which an initial position of movement of the end of the boom is set as an origin and two directions on the movement plane perpendicular to each other are set as an X axis and a Y axis; the desired movement direction of the end of the boom is determined by corresponding the direction of the line, connecting the origin of the rectangular coordinate system of the touch screen to the position of the touch point on the touch screen, to a direction forming the same angle with the X axis and the Y axis in the rectangular coordinate system of actual movement.

5. The engineering vehicle boom controller according to claim 4, wherein the touch screen is square or rectangular; in the rectangular coordinate system of the touch screen, the X axis is parallel to upper and lower borders of the touch screen and has a positive direction pointing to the right of the touch screen, the Y axis is parallel to right and left borders of the touch screen and has a positive direction pointing to the upside of the touch screen.

6. The engineering vehicle boom controller according to claim 4, wherein the desired movement speed of the end of the boom is determined by a distance between the position of the touch point on the touch screen and the origin of the rectangular coordinate system of the touch screen, and the greater the distance is, the higher the speed is.

7. The engineering vehicle boom controller according to any of claims 1 to 3, wherein the corresponding relationship between the position of the touch point on the touch screen and the movement direction of the end of the boom is established in the following way: establishing a polar coordinate system of the touch screen, in which the display position of the operation sensing sign in a sleeping state is set as a pole and a predetermined direction is set as a polar axis; establishing a polar coordinate system of actual movement on the movement plane of the end of the boom, in which the initial position of movement of the end of the boom is set as a pole and a predetermined movement direction on the movement plane is set as a polar axis; the desired movement direction of the end of the boom is obtained in the following way: obtaining a polar angle value of the touch point in the polar coordinate system of the touch screen, and obtaining the same polar angle value in the polar coordinate system of actual movement as that in the polar coordinate system of the touch screen, in which the movement direction represented by the polar angle value is the desired direction of movement of the end of the boom.

8. The engineering vehicle boom controller according to claim 7, wherein the touch screen is square or rectangle; in the polar coordinate system of the touch screen, the polar axis is parallel to upper and lower borders of the touch screen and has a positive direction pointing to the right of the touch screen.

9. The engineering vehicle boom controller according to claim 7, wherein the desired movement speed of the end of the boom is determined by a polar radius value of the touch point in the polar coordinate system of the touch screen, and the greater the polar radius value is, the higher the speed is.

10. An engineering vehicle boom control system, comprising the engineering vehicle boom controller according to any of claims 1 to 9.

11. An engineering vehicle, comprising the engineering vehicle boom control system according to claim 10.

12. The engineering vehicle according to claim 11, wherein the engineering vehicle is a concrete pump truck or a crane.

13. An engineering vehicle boom control method, comprising:
displaying an operation sensing sign on a touch screen, sensing an exterior touch, and generating a touch sensing signal which indicates a position of a touch point on the touch screen;
receiving the touch sensing signal from the touch screen, obtaining the position of the touch point on the touch screen, determining whether there is an overlap between the position of the touch point and a current position of the operation sensing sign, setting the operation sensing sign as in an activated state if there is an overlap between the position of the touch point and the current position of the operation sensing sign, and sending a corresponding display control command which instructs the operation sensing sign to display at the position of the touch point indicated by the touch sensing signal;
in response to the display control command, providing a display drive to the touch screen to control a display content of the touch screen, the display content comprising a shape of the operation sensing sign and the position of the operation sensing sign on the touch screen; and
when receiving the touch sensing signal from the touch screen and an operation sensing sign state signal, generating a control command reflecting a desired speed and direction of movement of the end of the boom based on the position of the touch point on the touch screen represented by the touch sensing signal and a predetermined corresponding relationship if the operation sensing sign is in an activated state, and sending the control command in a wired or wireless way.

14. The method according to claim 13, wherein when the operation sensing sign is in activated state, the operation sensing sign is reset as in a sleeping state if the touch sensing signal disappears.

15. The method according to claim 14, wherein the operation sensing sign in a sleeping state is displayed in a geometric centre of the touch screen.

16. The method according to any of claims 13 to 15, wherein the corresponding relationship between the position of the touch point on the touch screen and the movement direction of the end of the boom is established in the following way: establishing a rectangular coordinate system of the touch screen on a touch plane of the touch screen, in which a display position of the operation sensing sign in a sleeping state is set as an origin and predetermined directions are set as an X axis and a Y axis perpendicular to each other; establishing a rectangular coordinate system of actual movement on a movement plane of the end of the boom, in which an initial position of movement of the end of the boom is set as an origin and two directions perpendicular to each other on the movement plane are set as an X axis and a Y axis; the desired movement direction of the end of the boom is determined by corresponding the direction of the line, connecting the origin of the rectangular coordinate system of the touch screen to the position of the touch point on the touch screen, to a direction forming the same angle with the X axis and the Y axis in rectangular coordinate system of actual movement.

17. The method according to any of claims 13 to 15, wherein the corresponding relationship between the position of the touch point on the touch screen and the movement direction of the end of the boom is established in the following way:
establishing a polar coordinate system of the touch screen, in which a display position of the operation sensing sign in a sleeping state is set as a pole and a predetermined direction is set as a polar axis; establishing a polar coordinate system of actual movement on a movement plane of the end of the boom, in which an initial position of movement of the end of the boom is set as a pole and a predetermined movement direction on the movement plane is set as a polar axis; the desired movement direction of the end of the boom is obtained in the following way: obtaining a polar angle value of the touch point in the polar coordinate system of the touch screen, and obtaining the same polar angle value in the polar coordinate system of actual movement as that in the polar coordinate system of the touch screen, in which the movement direction represented by the polar angle value is the desired direction of movement of the end of the boom.

## Patentansprüche

1. Eine Konstruktion Fahrzeugbaumsteuerung, aufweisend:
einen Berührbildschirm, der eine Anzeige und einen Berührsensor, eine Anzeigetreibereinheit, eine Anzeigesteuereinheit und eine Steuerbefehlerzeugeeinheit aufweist; wobei
der Berührbildschirm ein Betätigungsaufnahmesymbol darstellt, eine äußere Berührung aufnimmt, und ein Berühraufnahmesignal generiert, welches die Position eines Berührpunktes auf dem Berührbildschirm wiederspiegelt;
die Anzeigetreibereinheit, in Antwort auf einen Anzeigesteuerbefehl von der Anzeigesteuereinheit dem Berührbildschirm einen Anzeigeantrieb zur Verfügung stellt, um einen Anzeigeninhalt des Berührbildschirms zu steuern, wobei der Anzeigeinhalt eine Form des Betätigungsaufnahmeymbol und eine Position des Betätigungsaufnahmesymbols auf dem Berührbildschirm aufweist;
die Anzeigesteuereinheit das Berühraufnahmesignal von dem Berührbildschirm empfängt, die Position des Berührpunkts auf dem Berührbildschirm erhält, bestimmt, ob es eine Überlappung zwischen der Position des Berührpunkts und einer aktuellen Position des Betätigungsaufnahmesymbols gibt, und das Betätigungsaufnahmesymbol in einen aktivierten Zustand versetzt, wenn es eine Überlappung zwischen der Position des Berührpunkts und der aktuellen Position des Betätigungsaufnahmesymbols gibt; wenn das Betätigungsaufnahmesymbol in einem aktivierten Zustand ist, das Betätigungsaufnahmesymbol in einen Schlafzustand zurücksetzt, wenn das Berührfühlsignal verschwindet; wenn das Betätigungsaufnahmesymbol in einem aktivierten Zustand ist, den Anzeigesteuerbefehl der Anzeigetreibeeinheit zur Verfügung stellt, wobei der Anzeigesteuerbefehl das Betätigungsaufnahmesymbol anweist, an der Position des Berührpunkts zu erscheinen, welche von dem Berühraufnahmesignal gekennzeichnet wird, und
die Steuerbefehlserzeugeeinheit das Berühraufnahmesignal von dem Berührbildschirm und ein Betätigungsaufnahmesymbolzustandssignal von der Anzeigensteuereinheit empfängt, einen Steuerbefehl erzeugt, welcher eine gewünschte Geschwindigkeit und Richtung einer Bewegung des Endes des Baumes wiederspiegelt, basierend auf der Position des Berührpunkts auf dem Berührbildschirm, welche von dem Berühraufnahmesignal dargestellt wird, und einer vorherbestimmten Übereinstimmen Beziehung, falls das Betätigungsaufnahmesymbol in einem aktivierten Zustand ist, und den Steuerbefehl drahtgebunden oder drahtlos aussendet.

2. Die Konstruktion Fahrzeugbaumsteuerung nach Anspruch 1, wobei das Betätigungsaufnahmesymbol in einem Schlafzustand in einem geometrischen Zentrum des Berührbildschirms angezeigt wird.

3. Die Konstruktion Fahrzeugbaumsteuerung nach Anspruch 1, wobei das Betätigungsaufnahmesymbol ein Punkt mit einem bestimmten Bereich ist.

4. Die Konstruktion Fahrzeugbaumsteuerung nach einem der Ansprüche 1 bis 3, wobei die Übereinstimmen Beziehung zwischen der Position des Berührpunkts auf dem Berührbildschirm und der Bewegungsrichtung des Ende des Baums folgendermaßen gebildet wird:
Bilden eines rechtwinkligen Koordinatensystems des Berührbildschirms auf einer Berührebene des Berührbildschirms, in welcher eine Anzeigeposition des Betätigungsaufnahmesymbols in einem Schlafzustand als ein Ursprung gesetzt ist und vorbestimmte Richtungen senkrecht zueinander als X-Achse und Y-Achse gesetzt sind;
Bilden eines rechtwinkligen Koordinatensystems einer momentanen Bewegung in einer Bewegungsebene des Endes des Baums, in welcher eine Anfangsposition der Bewegung des Endes des Baumes als ein Ursprung gesetzt wird und zwei Richtungen in der Bewegungsebene senkrecht zueinander als eine X-Achse und eine Y-Achse gesetzt werden; wobei die gewünschte Bewegungsrichtung des Endes des Baums bestimmt wird indem die Richtung der Geraden, welche den Ursprung des rechtwinkligen Koordinatensystems des Berührbildschirms mit der Position des Berührpunkts auf dem Berührbildschirm verbindet, mit einer Richtung in Übereinstimmung gebracht wird, welche denselben Winkel mit der X-Achse und der Y-Achse in dem rechtwinkligen Koordinatensystem der momentanen Bewegung bildet.

5. Die Konstruktion Fahrzeugbaumsteuerung nach Anspruch 4, wobei der Berührbildschirm quadratisch oder rechteckig ist; in dem rechtwinkligen Koordinatensystem des Berührbildschirms liegt die X-Achse parallel zum oberen und unteren Rand des Berührbildschirms und weist eine positive Richtung auf, die auf die rechte Seite des Berührbildschirms zeigt, die Y-Achse liegt parallel zum rechten und linken Rand des Berührbildschirms und weist eine positive Richtung auf, die auf die Oberseite des Berührbildschirms zeigt.

6. Die Konstruktion Fahrzeugbaumsteuerung nach Anspruch 4, wobei die gewünschte Bewegungsgeschwindigkeit des Endes des Baums von einem Abstand zwischen der Position des Berührpunkts auf dem Berührbildschirm und dem Ursprung des rechtwinkligen Koordinatensystems des Berührbildschirms bestimmt wird und je größer der Abstand ist, desto größer ist die Geschwindigkeit.

7. Die Konstruktion Fahrzeugbaumsteuerung nach einem der Ansprüche 1 bis 3, wobei die Übereinstimmen Beziehung zwischen der Position des Berührpunkts auf dem Berührbildschirm und der Bewegungsrichtung des Endes des Baumes folgendermaßen gebildet wird:
Bilden eines Polarkoordinatensystems auf dem Berührbildschirm, in welchem die Anzeigeposition des Betätigungsaufnahmesymbols in einem schlafenden Zustand als ein Pol gesetzt wird und eine vorbestimmte Richtung als eine Polachse gesetzt wird;
Bilden eines Polarkoordinatensystems einer momentanen Bewegung in der Bewegungsebene des Endes des Baums, in welcher die Anfangsposition der Bewegung des Endes des Baums als ein Pol gesetzt wird und eine vordefinierte Bewegungsrichtung in der Bewegungsebene als eine Polachse gesetzt wird; wobei die gewünschte Bewegungsrichtung des Endes des Baums folgendermaßen erhalten wird:
Erhalten eines Polwinkelwertes des Berührpunktes in dem Polarkoordinatensystem des Berührbildschirms und Erhalten des gleichen Polwinkelwertes in dem Polarkoordinatensystem der momentanen Bewegung wie desjenigen in dem Polarkoordinatensystem des Berührbildschirms, in welchem die Bewegungsrichtung, die von dem Polwinkelwert dargestellt wird, die gewünschte Bewegungsrichtung des Endes des Baums ist.

8. Die Konstruktion Fahrzeugbaumsteuerung nach Anspruch 7, wobei der Berührbildschirm quadratisch oder rechteckig ist; wobei die Polachse in dem Polarkoordinatensystem des Berührbildschirms parallel zu dem oberen und unteren Rand des Berührbildschirms liegt und eine positive Richtung aufweist, die auf die rechte Seite des Berührbildschirms zeigt.

9. Die Konstruktion Fahrzeugbaumsteuerung nach Anspruch 7, wobei die gewünschte Bewegungsgeschwindigkeit des Endes des Baums von einem Polradiuswert des Berührpunkts in dem Polarkoordinatensystem des Berührbildschirms bestimmt wird und je größer der Polradiuswert ist, desto größer ist die Geschwindigkeit.

10. Ein Konstruktion Fahrzeugbaumsteuersystem aufweisend die Konstruktion Fahrzeugbaumsteuerung nach einem der Ansprüche 1 bis 9.

11. Ein Konstruktion Fahrzeug aufweisend das Konstruktion Fahrzeugbaumsteuersystem nach Anspruch 10.

12. Das Konstruktion Fahrzeug nach Anspruch 11, wobei das Konstruktion Fahrzeug ein Betonpumpenlastfahrzeug oder ein Kran ist.

13. Ein Konstruktion Fahrzeugbaumsteuerverfahren, aufweisend:
Anzeigen eines Betätigungsaufnahmesymbols auf einem Berührbildschirm, Aufnehmen einer äußeren Berührung und Erzeugen eines Berühraufnahmesignals, welches eine Position eines Berührpunkts auf dem Berührbildschirm kennzeichnet;
Empfangen des Berühraufnahmesignals von dem Berührbildschirm, Erhalten der Position des Berührpunktes auf dem Berührbildschirm, Bestimmen, ob es eine Überlappung zwischen der Position des Berührpunktes und einer aktuellen Position des Betätigungsaufnahmeymbols gibt, Versetzen des Betätigungsaufnahmesymbols in einen aktivierten Zustand, wenn es eine Überlappung zwischen der Position des Berührpunktes und der aktuellen Position des Betätigungsaufnahmesymbols gibt, und Aussenden eines entsprechenden Anzeigesteuerbefehls, welcher das Betätigungsaufnahmesymbol anweist, an der Position des Berührpunktes, welche von dem Berührfühlsignal gekennzeichnet wird, zu erscheinen;
in Antwort auf den Anzeigensteuerbefehl Bereitstellen eines Anzeigenantriebs an den Berührbildschirm, um einen Anzeigeinhalt auf dem Berührbildschirm zu steuern, wobei der Anzeigeinhalt eine Form des Betätigungsaufnahmesymbols und die Position des Betätigungsaufnahmesymbols auf dem Bildschirm aufweist; und
wenn das Berühraufnahmesignal von dem Berührbildschirm und ein Betätigungsaufnahmesymbolzustandsignal empfangen wird, Erzeugen eines Steuerbefehls, welcher eine gewünschte Geschwindigkeit und Bewegungsrichtung des Endes des Baumes wiederspiegelt, basierend auf der Position des Berührpunkts auf dem Berührbildschirm, welche von dem Berühraufnahmesignal dargestellt wird, und einer vorherbestimmten Übereinstimmen Beziehung, falls das Betätigungsaufnahmesymbol in einem aktivierten Zustand ist, und Aussenden des Steuerbefehls auf einem drahtgebundenen oder drahtlosen Weg.

14. Das Verfahren nach Anspruch 13, wobei, wenn das Betätigungsaufnahmesymbol in einem aktivierten Zustand ist, das Betätigungsaufnahmesignal in einen Schlafzustand zurückgesetzt wird, wenn das Berühraufnahmesignal verschwindet.

15. Das Verfahren nach Anspruch 14, wobei das Betätigungsaufnahmesymbol in einem Schlafzustand in einem geometrischen Zentrum des Berührbildschirms dargestellt wird.

16. Das Verfahren nach einem der Ansprüche 13 bis 15, wobei die Übereinstimmen Beziehung zwischen der Position des Berührpunkts auf dem Berührbildschirm und der Bewegungsrichtung des Endes des Baums folgendermaßen gebildet wird:
Bilden eines rechtwinkligen Koordinatensystems des Berührbildschirms in einer Berührebene des Berührbildschirms, in welcher eine Anzeigenposition des Betätigungsaufnahmesymbols in einem Schlafzustand als Ursprung gesetzt wird und vorgegebene Richtungen als eine X-Achse und eine Y-Achse senkrecht zueinander gesetzt werden;
Bilden eines rechtwinkligen Koordinatensystems der momentanen Bewegung in einer Bewegungsebene des Endes des Baums, in welcher eine Anfangsposition der Bewegung des Endes des Baums als Ursprung gesetzt wird und zwei Richtungen senkrecht zueinander in der Bewegungsebene als eine X-Achse und eine Y-Achse gesetzt werden; wobei die gewünschte Bewegungsrichtung des Endes des Baums bestimmt wird, indem die Richtung der Geraden, welche den Ursprung des rechtwinkligen Koordinatensystems des Berührbildschirms mit der Position des Berührpunktes auf dem Berührbildschirm verbindet, mit einer Richtung in Übereinstimmung gebracht wird, welche den gleichen Winkel zwischen der X-Achse und der Y-Achse in einem rechtwinkligen Koordinatensystem der momentanen Bewegung bildet.

17. Das Verfahren nach einem der Ansprüche 13 bis 15, wobei die Übereinstimmen Beziehung zwischen der Position des Berührpunkts auf dem Berührbildschirm und der Bewegungsrichtung des Endes des Baums folgendermaßen gebildet wird:
Bilden eines Polarkoordinatensystems des Berührbildschirms, in welchem eine Anzeigenposition des Betätigungsaufnahmesymbols in einem schlafenden Zustand als ein Pol festgesetzt wird und eine vorbestimmte Richtung als eine Polachse festgesetzt wird;
Bilden eines Polarkoordinatensystems einer momentanen Bewegung in einer Bewegungsebene des Endes des Baums, in welcher eine Anfangsposition der Bewegung des Endes des Baums als ein Pol gesetzt wird und eine vordefinierte Bewegungsrichtung in der Bewegungsebene als Polachse festgesetzt wird; wobei die gewünschte Bewegungsrichtung des Endes des Baums folgendermaßen erhalten wird:
Erhalten eines Polwinkelwertes des Berührpunkts in dem Polarkoordinatensystem des Berührbildschirms, und Erhalten des gleichen Polwinkelwertes in dem Polarkoordinatensystem der momentanen Bewegung wie desjenigen in dem Polarkoordinatensystem des Berührbildschirms, in welchem die Bewegungsrichtung, die von dem Polarwinkelwert dargestellt wird, die gewünschte Bewegungsrichtung des Endes des Baums ist.

## Revendications

1. Dispositif de commande de flèche pour engin de travaux publics, comprenant : un écran tactile incluant un écran et un capteur tactile, une unité de commande d'affichage, une unité de contrôle d'affichage, et une unité de génération d'instruction de contrôle, dans lequel
l'écran tactile affiche un signe de détection de fonctionnement, détecte un contact extérieur, et génère un signal de détection tactile reflétant une position d'un point de contact sur l'écran tactile,
l'unité de commande d'affichage, en réponse à une instruction de contrôle d'affichage en provenance de l'unité de contrôle d'affichage, délivre une commande d'affichage à l'écran tactile pour contrôler un contenu d'affichage de l'écran tactile, le contenu d'affichage incluant une forme du signe de détection de fonctionnement et une position du signe de détection de fonctionnement sur l'écran tactile,
l'unité de contrôle d'affichage reçoit le signal de détection de contact en provenance de l'écran tactile, obtient la position du point de contact sur l'écran tactile, détermine s'il existe un chevauchement entre la position du point de contact et une position actuelle du signe de détection de fonctionnement, et définit le signe de détection de fonctionnement ; comme étant dans un état activé s'il existe un chevauchement entre la position du point de contact et la position actuelle du signe de détection de fonctionnement ; lorsque le signe de détection de fonctionnement est dans un état activé, réinitialise le signe de détection de fonctionnement comme étant dans un état de sommeil si le signal de détection de contact disparaît ; lorsque le signe de détection de fonctionnement est dans un état activé, délivre l'instruction de contrôle d'affichage à l'unité de commande d'affichage, l'instruction de contrôle d'affichage ordonnant au signe de détection de fonctionnement de s'afficher à la position du point de contact indiqué par le signal de détection de contact, et
l'unité de génération d'instruction de contrôle reçoit le signal de détection de contact en provenance de l'écran tactile et un signal d'état de signe de détection de fonctionnement en provenance de l'unité de contrôle d'affichage, génère une instruction de contrôle qui reflète une vitesse souhaitée et une direction de déplacement de l'extrémité de la flèche sur la base de la position du point de contact sur l'écran tactile représenté par le signal de détection de contact et d'une relation de correspondance prédéterminée, si le signe de détection de fonctionnement est dans un état activé, et envoie l'instruction de contrôle de manière filaire ou sans fil.

2. Dispositif de commande de flèche pour engin de travaux publics selon la revendication 1, dans lequel le signe de détection de fonctionnement dans un état de sommeil est affiché au niveau d'un centre géométrique de l'écran tactile.

3. Dispositif de commande de flèche pour engin de travaux publics selon la revendication 1, dans lequel le signe de détection de fonctionnement est un point ayant une certaine surface.

4. Dispositif de commande de flèche pour engin de travaux publics selon l'une quelconque des revendications 1 à 3, dans lequel la relation de correspondance entre la position du point de contact sur l'écran tactile et la direction de déplacement de l'extrémité de la flèche est établie de la façon suivante : on établit un système de coordonnées rectangulaires de l'écran tactile sur un plan de contact de l'écran tactile, dans lequel une position d'affichage du signe de détection de fonctionnement dans un état de sommeil est définie en tant qu'origine et des directions prédéterminées perpendiculaires l'une par rapport à l'autre sont définies en tant qu'axe X et axe Y ; on établit un système de coordonnées rectangulaires de déplacement réel sur un plan de déplacement de l'extrémité de la flèche, dans lequel une position initiale de déplacement de l'extrémité de la flèche est définie en tant qu'origine et deux directions sur le plan de déplacement perpendiculaires l'une par rapport à l'autre sont définies en tant qu'axe X et axe Y ; la direction de déplacement souhaitée de l'extrémité de la flèche est déterminée par la direction correspondante de la ligne, reliant l'origine du système de coordonnées rectangulaires de l'écran tactile à la position du point de contact sur l'écran tactile, dans une direction formant le même angle avec l'axe X et l'axe Y dans le système de coordonnées rectangulaires de déplacement réel.

5. Dispositif de commande de flèche pour engin de travaux publics selon la revendication 4, dans lequel l'écran tactile est de forme carrée ou rectangulaire ; dans le système de coordonnées rectangulaires de l'écran tactile, l'axe X est parallèle aux bords supérieur et inférieur de l'écran tactile et a une direction positive pointant vers la droite de l'écran tactile, l'axe Y est parallèle aux bords droit et gauche de l'écran tactile et a une direction positive pointant vers le haut de l'écran tactile.

6. Dispositif de commande de flèche pour engin de travaux publics selon la revendication 4, dans lequel la vitesse de déplacement souhaitée de l'extrémité de la flèche est déterminée par une distance entre la position du point de contact sur l'écran tactile et l'origine du système de coordonnées rectangulaires de l'écran tactile, et plus la distance est importante, plus la vitesse est élevée.

7. Dispositif de commande de flèche pour engin de travaux publics selon l'une quelconque des revendications 1 à 3, dans lequel la relation de correspondance entre la position du point de contact sur l'écran tactile et la direction de déplacement de l'extrémité de la flèche est établie de la façon suivante : on établit un système de coordonnées polaires de l'écran tactile, dans lequel la position d'affichage du signe de détection de fonctionnement dans un état de sommeil est définie en tant que pôle et une direction prédéterminée est définie en tant qu'axe polaire ; on établit un système de coordonnées polaires de déplacement réel sur le plan de déplacement de l'extrémité de la flèche, dans lequel la position initiale de déplacement de l'extrémité de la flèche est définie en tant que pôle et une direction de déplacement prédéterminée sur le plan de déplacement est définie en tant qu'axe polaire; la direction de déplacement souhaitée de l'extrémité de la flèche est obtenue de la manière suivante : on obtient une valeur d'angle polaire du point de contact dans le système de coordonnées polaires de l'écran tactile, et on obtient la même valeur d'angle polaire dans le système de coordonnées polaires de déplacement réel que celle dans le système de coordonnées polaires de l'écran tactile, dans lequel la direction de déplacement représentée par la valeur de l'angle polaire est la direction de déplacement souhaitée de l'extrémité de la flèche.

8. Dispositif de commande de flèche pour engin de travaux publics selon la revendication 7, dans lequel l'écran tactile est carré ou rectangle, dans le système de coordonnées polaires de l'écran tactile, l'axe polaire est parallèle aux bords supérieur et inférieur de l'écran tactile et a une direction positive pointant vers la droite de l'écran tactile.

9. Dispositif de commande de flèche pour engin de travaux publics selon la revendication 7, dans lequel la vitesse de déplacement souhaitée de l'extrémité de la flèche est déterminée par une valeur du rayon polaire du point de contact dans le système de coordonnées polaires de l'écran tactile, et plus la valeur du rayon polaire est élevée, plus la vitesse est élevée.

10. Système de commande de flèche pour engin de travaux publics, comprenant le dispositif de commande de flèche pour engin de travaux publics selon l'une quelconque des revendications 1 à 9.

11. Engin de travaux publics, comprenant le système de commande de flèche pour engin de travaux publics, selon la revendication 10.

12. Engin de travaux publics selon la revendication 11, dans lequel l'engin de travaux publics est un camion pompe à béton ou une grue.

13. Procédé de commande de flèche pour engin de travaux publics, comprenant les étapes consistant à :
afficher un signe de détection de fonctionnement sur un écran tactile, détecter un contact extérieur, et générer un signal de détection de contact qui indique une position d'un point de contact sur l'écran tactile;
recevoir le signal de détection de contact en provenance de l'écran tactile, obtenir la position du point de contact sur l'écran tactile, déterminer s'il existe un chevauchement entre la position du point de contact et une position actuelle du signe de détection de fonctionnement, définir le signe de détection de fonctionnement comme étant dans un état activé s'il existe un chevauchement entre la position du point de contact et la position actuelle du signe de détection de fonctionnement, et
envoyer une instruction de contrôle d'affichage correspondante qui ordonne au signe de détection de fonctionnement de s'afficher à la position du point de contact indiqué par le signal de détection de contact,
en réponse à l'instruction de contrôle d'affichage, délivrer une commande d'affichage à l'écran tactile pour contrôler un contenu d'affichage de l'écran tactile, le contenu d'affichage comportant une forme du signe de détection de fonctionnement et la position du signe de détection de fonctionnement sur l'écran tactile, et
à la réception du signal de détection de contact en provenance de l'écran tactile et d'un signal d'état de signe de détection de fonctionnement, générer une instruction de contrôle qui reflète une vitesse souhaitée et une direction de déplacement de l'extrémité de la flèche sur la base de la position du point de contact sur l'écran tactile représenté par le signal de détection de contact et d'une relation de correspondance prédéterminée si le signe de détection de fonctionnement est dans un état activé, et envoyer l'instruction de contrôle de manière filaire ou sans fil.

14. Procédé selon la revendication 13, dans lequel lorsque le signe de détection de fonctionnement est dans un état activé, le signe de détection de fonctionnement est réinitialisé comme dans un état de sommeil si le signal de détection de contact disparaît.

15. Procédé selon la revendication 14, dans lequel le signe de détection de fonctionnement dans un état de sommeil est affiché au niveau d'un centre géométrique de l'écran tactile.

16. Procédé selon l'une quelconque des revendications 13 à 15, dans lequel la relation de correspondance entre la position du point de contact sur l'écran tactile et la direction de déplacement de l'extrémité de la flèche est établie de la façon suivante : on établit d'un système de coordonnées rectangulaires de l'écran tactile sur un plan de contact de l'écran tactile, dans lequel une position d'affichage du signe de détection de fonctionnement dans un état de sommeil est définie en tant qu'origine et des directions prédéterminées perpendiculaires l'une par rapport à l'autre sont définies en tant qu'axe X et axe Y ; on établit un système de coordonnées rectangulaires de déplacement réel sur un plan de déplacement de l'extrémité de la flèche, dans lequel une position initiale de déplacement de l'extrémité de la flèche est définie en tant qu'origine et deux directions perpendiculaires l'une par rapport à l'autre sur le plan de déplacement sont définies en tant qu'axe X et axe Y ; la direction de déplacement souhaitée de l'extrémité de la flèche est déterminée par la direction correspondante de la ligne, reliant l'origine du système de coordonnées rectangulaires de l'écran tactile à la position du point de contact sur l'écran tactile, dans une direction formant le même angle avec l'axe X et l'axe Y dans le système de coordonnées rectangulaires de déplacement réel.

17. Procédé selon l'une quelconque des revendications 13 à 15, dans lequel la relation de correspondance entre la position du point de contact sur l'écran tactile et la direction de déplacement de l'extrémité de la flèche est établie de la manière suivante :
on établit un système de coordonnées polaires de l'écran tactile, dans lequel une position d'affichage du signe de détection de fonctionnement dans un état de sommeil est définie en tant que pôle et une direction prédéterminée est définie en tant qu'axe polaire ; on établit un système de coordonnées polaires de déplacement réel sur un plan de déplacement de l'extrémité de la flèche, dans lequel une position initiale de déplacement de l'extrémité de la flèche est définie en tant que pôle et une direction de déplacement prédéterminée sur le plan de déplacement est définie en tant qu'axe polaire; la direction de déplacement souhaitée de l'extrémité de la flèche est obtenue de la manière suivante : on obtient une valeur d'angle polaire du point de contact dans le système de coordonnées polaires de l'écran tactile, et on obtient la même valeur d'angle polaire dans le système de coordonnées polaires de déplacement réel que celle dans le système de coordonnées polaires de l'écran tactile, dans lequel la direction de déplacement représentée par la valeur de l'angle polaire est la direction de déplacement souhaitée de l'extrémité de la flèche.
